# EUROPEAN PATENT APPLICATION

(11) **EP 1 487 087 A2**
(43) Date of publication of application: **15.12.2004**
(21) Application number: 04013663.2
(22) Date of filing: 09.06.2004
(51) Int. Cl.: H02K 3/52

(54) **Coil terminal circuit structure for rotary electrical device**

(30) Priority: 10.06.2003 JP 2003165145; 03.06.2004 US 709882
(71) Applicant: Kabushiki Kaisha Moric, Shuuchi-gun, Shizuoka-ken (JP)
(72) Inventor: Takano, Tadashi, Shuchi-gun, Shizuoka-ken (JP); Ariyoshi, Hayato, Shuchi-gun, Shizuoka-ken (JP)
(74) Representative: Leson, Thomas Johannes Alois, Dipl.-Ing.

(57) **Abstract**

A terminal structure (67) for interconnecting coil ends in a plural phase rotary electrical machine and adapted to be mounted at one axial end of a core having a plurality of circumferentially spaced pole teeth around which electrical coils are wound, comprising a plurality of conductors (68) equal in number to the number of phases and bonded in spaced relationship to each other, each of said conductors having terminal ends extending outwardly beyond the bonding material and having wire receiving recesses therein for receiving a coll wire end from a respective one of said coil windings.

## Description

### Background of Invention

This invention relates to a coil terminal circuit structure for a rotary electrical machine and more particularly to a structure for facilitates the connection of the coil winding ends in a multi phase machine.

Multi-phase rotary electrical machines such as either motors or generators are well known and comprise armatures consisting of a magnetic core material having a plurality of circumferentially spaced pole teeth around which coils are wound. In these constructions the coil ends of each phase are connected to respective phase terminal conductors which are, in turn, connected to external phase terminals. The phase conductors are normally embedded in an insulating bonding material to electrically insulate them from each other and for other reasons. The coil winding terminal ends are exposed radially outwardly at different axial and circumferential positions. In addition the terminal conductors normally all have the same configuration. An example of this type of structure is shown in Japanese Published Application, publication number, Hei 6-233483(A).

This type of construction has a number of disadvantages that limit its applicability and versatility and add to the cost. For example since the terminal ends of the phases are at different axial positions, machine assembly must be done manually adding to the cost and possible unreliability. Also the use of common phase conductors makes it difficult to provide different numbers of pole teeth and coils as well as compromising the types of wiring patterns that can be utilized.

Therefore it is a principle object of this invention to provide a multi-phase terminal connection that facilitates the making of the coil winding end connections as well as offering greater versatility in the wiring patterns that can be employed.

### Summary of Invention

A first feature of the invention is adapted to be embodied in a terminal structure for interconnecting coil ends in a plural phase rotary electrical machine and adapted to be mounted at one axial end of a core having a plurality of circumferentially spaced pole teeth around which electrical coils are wound. The terminal structure comprises a plurality of conductors equal in number to at least the number of phases and bonded in spaced relationship to each other. Each of the conductors has terminal ends extending outwardly beyond the bonding material and having wire receiving recesses therein for receiving a coil wire end from a respective one of the coil windings. In accordance with this feature, substantially all of the wire receiving recesses lie in a common axial plane.

In some embodiments incorporating this first feature, the conductors are axially spaced from each other while in other embodiments they are circumferentially spaced from each other.

Another feature of the invention is adapted to be embodied in a terminal structure for interconnecting coil ends in a plural phase rotary electrical machine and adapted to be mounted at one axial end of a core having a plurality of circumferentially spaced pole teeth around which electrical coils are wound. The terminal structure comprises a plurality of conductors equal in number to at least the number of phases and bonded in spaced relationship to each other. Each of the phase is comprised of a plurality of interconnected conductors each having at least two circumferentially spaced terminal end portions for receiving a coil wire end from a respective one of the coil windings.

In some embodiments incorporating this other feature, the conductors are axially spaced from each other.

### Brief Description of Drawings

FIG. 1 is an axial cross sectional view of a rotating electrical machine embodying the invention.

FIG. 2 is an electrical diagram showing a first wiring pattern that may be employed with a first embodiment of the invention.

FIG. 3 is an electrical diagram, in part similar to FIG. 2, showing a second wiring pattern that may be employed with a first embodiment of the invention.

FIG. 4 is an enlarged side elevational view showing how a coil winding end is trapped and stripped by a terminal constructed in accordance with the invention.

FIG. 5 is a schematic view showing how the coil windings are interconnected in accordance with a first embodiment of the invention.

FIGS. 6A-6C are top plan views showing the terminal connections for the three phases of the first embodiment.

FIG. 7 is an electrical diagram, in part similar to FIGS. 2 and 3, showing a first wiring pattern that may be employed with a second embodiment of the invention.

FIG. 8 is an electrical diagram, in part similar to FIGS. 2, 3 and 7, showing a second wiring pattern that may be employed with the second embodiment of the invention.

FIG. 9 is a schematic view, in part similar to FIG. 5 showing how the coil windings are interconnected in accordance with a second embodiment of the invention.

FIGS. 10A-10C are top plan views, in part similar to FIGS. 6A-6C, showing the terminal connections for the three phases of the second embodiment.

FIG. 11 is an electrical diagram, in part similar to FIGS. 2, 3, 7 and 8 showing a first wiring pattern that may be employed with a third embodiment of the invention.

FIG. 12 is an electrical diagram, in part similar to FIGS. 2, 3, 7, 8 and 11 showing a second wiring pattern that may be employed with the third embodiment of the invention.

FIG. 13 is a schematic view, in part similar to FIGS. 5 and 9 showing how the coil windings are interconnected in accordance with a third embodiment of the invention.

FIGS. 14A-14C are top plan views, in part similar to FIGS. 6A-6C and 10A-10C, showing the terminal connections for the three phases of the third embodiment.

FIG. 15 is an electrical diagram, in part similar to FIGS. 2, 3, 7, 8 and 11 showing a first wiring pattern that may be employed with a fourth embodiment of the invention.

FIG. 16 is an electrical diagram, in part similar to FIGS. 2, 3, 7, 8, 11 and 12 showing a second wiring pattern that may be employed with the fourth embodiment of the invention.

FIG. 17 is a schematic view, in part similar to FIGS. 5, 9 and 13 showing how the coil windings are interconnected in accordance with a fourth embodiment of the invention.

FIGS. 18A-18C are top plan views, in part similar to FIGS. 6A-6C, 10A-10C and, 14A-14C, showing the terminal connections for the three phases of the fourth embodiment.

FIG. 19 is a top plan view of a terminal circuit unit having a different embodiment of coil wire end attachment.

FIG. 20 is a side elevational view of the embodiment shown in FIG. 19.

FIG. 21 is a side elevational view, in part similar to FIG. 20, but shows the terminal circuit unit attached to the remainder of the armature, shown in section.

FIG. 22 is a top plan view of a stator, armature constructed utilizing a different embodiment of phase specific terminal members and is taken along the line 22-22 of FIG. 23.

FIG. 23 is a side elevational view looking in the direction of the line 23-23 of FIG. 22.

FIG. 24 is a side elevational view looking in the direction of the line 24-24 of FIG. 22.

FIG. 25 is a bottom plan view of a stator, armature taken along the line 25-25 of FIG. 24.

FIG. 26 is a top plan view showing the three phase specific and common terminal members in their assembled positions.

FIG. 27 is a top plan view showing only the first phase specific terminal member.

FIG. 28 is a side elevational view of a first embodiment of the first phase specific terminal member before bending to receive the wire ends.

FIG. 29 is a side elevational view of the first phase specific terminal member, in part similar to FIG. 28 , showing another method of forming the external terminal, shown in its final position in phantom.

FIG. 30 is a top plan view showing only the second phase specific terminal member.

FIG. 31 is a side elevational view of the second phase specific terminal member before bending to form the external terminal, shown in its final position in phantom and before bending to receive the wire ends.

FIG. 32 is a top plan view showing only the third phase specific terminal member.

FIG. 33 is a side elevational view of the third phase specific terminal member before bending to receive the wire ends.

FIG. 34 is a top plan view showing only the common terminal member.

FIG. 35 is a side elevational view of the common terminal member before bending to receive the wire ends.

### Detailed Description

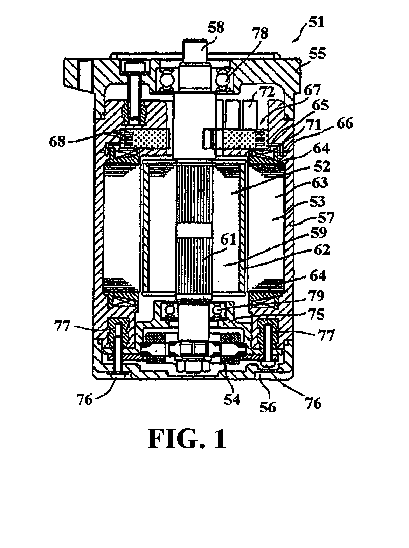

Referring now in detail to the drawings and first to FIG. 1, an electric motor is illustrated generally at 51, as an example of a type of multi-phase, rotary electrical machine embodying the invention. Those skilled in the art will readily understand that the invention is equally applicable to multi-phase generators. In the illustrated embodiment, the motor 51 is a three-phase, blushless type motor that includes a rotor, indicated generally at 52, a stator, indicated generally at 53, and a magnetic pole position detector, indicated generally at 54. These components are contained in a motor housing comprised of an upper cover 55 and a lower cover 56 that are suitably fixed to opposite ends of a generally cylindrical resin case 57.

The rotor 52 includes a rotor shaft 58 that is journalled, in a manner to be described, to provide the rotational axis of the motor 51. A rotor core 59 is secured for rotation with the rotor shaft 58 by means of a spline connection 81 or the like. The rotor core 59 is a laminated body made of sheet metal or a solid metallic piece and has a cylindrical shape. A plurality of circumferentially spaced magnet segments 62 are attached in any suitable manner to of the peripheral surface of the core 59.

The stator 53 includes a stator yoke 63 composed of a laminated body made of sheet metal having an outer ring like portion from which a plurality of circumferentially spaced pole teeth extend in a radially inward direction toward the rotor core 59. There may be any desired number of pole teeth (for example, twelve, sixteen, or eighteen) projecting in opposition to the magnet segments 62. Slots (not shown) are formed between adjacent pole teeth, as is well known in the art.

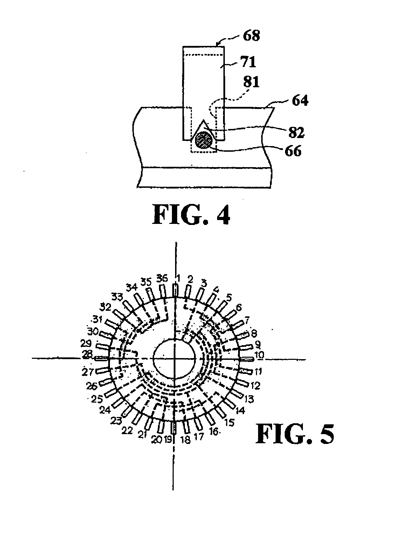

Upper and lower bobbin insulator halves 64 are positioned around the stator yoke 63. These bobbin insulator halves 64 embrace the pole teeth and have portions that extend into the slots between the pole teeth so as to provide location of the bobbin insulator halves 64 relative to the stator yoke 63. Coil windings 65 are wound up and down through the slots located on both sides of each magnetic pole tooth on appropriate surfaces of upper and lower insulator halves 64 to form coils 65 in the shape of a circular ring. Each coil 65 has two coil ends 66 which are bent outwardly and radially at right angles relative the rotor shaft 58, and projects through and out of a notch (to be described later by reference to FIG. 4) provided on the outer wall of the upper insulator 64.

A terminal structure, indicated generally at 67 is mounted above the upper end of the stator 53. The terminal circuit unit 67 has three-layer structure in which a phase-specific terminal member 68, corresponding to each of the three phases U, V, and W, is fixed in axially spaced relation. These three-layered, phase-specific terminal members 68 are fixed into one piece construction by means of insert molding with resin material 69. Each of the phase-specific terminal members 68 has a plurality of integral terminal pieces 71 projecting radially and externally on both sides for the connection to the coil winding ends 66 at the beginning and the end of the winding for each phase. An end on each terminal piece 71 is bent at a right angle and formed in parallel with the rotor axis. The bent end of the terminal piece 71 is engaged with and jointed with the coil end 66 of each coil 65 in a manner that will be described later by reference to FIG. 4. In this case, the axial position of the coil ends 66 is the same for all the coils 65. The position of the bent end of the terminal piece 71 on each of the three-layered, phase-specific terminal member 68 is aligned so that its position is in line with the position of the coil end 66. Thus more automatic assembly is possible with this construction. The three-layered, phase-specific terminal members 68 are connected to respective external output terminals 72 provided for each phase U, V, and W.

The terminal circuit unit 67 and the stator 53 are fixed together into one piece with by bonding the resin 69 of the terminal circuit unit with the molding resin of the cylindrical case 57. The upper cover 55 is secured to the upper end of the resin molding case 57 by fasteners 73 threaded into insert pieces 74 molded into its body. The lower cover 56 is secured to the lower end of the resin molding case 57 together with a holder 75 of the magnetic pole position detector 54 by threaded fasteners 76 threaded into insert pieces 77.

Finally, the rotor shaft 58 has its upper end journalled by the upper cover 55 by a bearing 78, and a lower end supported by the holder 75 through a bearing 79.

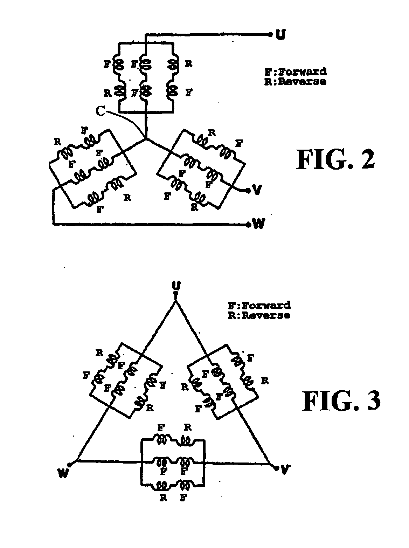

In addition to simplifying the connection of the coil wire ends 66 because of the common axial positions of the terminal pieces 71, the construction of the phase specific terminal members 68, permits a great latitude in how the coils of the phases can be connected, as will now be described, first by reference to FIGS. 2 and 3. These figures show, respectively the terminal circuit structure for 36 coil winding ends on the motor having 18 coils and how, in accordance with the invention they can be wired in a two coil series, three parallel connection. Specifically FIG. 2 shows a circuit diagram for Y-connection with the two-coil series, three parallel connection while FIG. 3 is a circuit diagram for Δ connection with the two coil series, three parallel connection.

The way in which the coil wire ends 66 are connected to the respective terminal circuits 36 will be described by reference to FIG. 4. One of the notches through which the right angle bends of the coil wire ends 66 previously mentioned appears in this figure and is identified by the reference numeral 81. As also seen in this figure, a V-groove 82 is formed at the end of each terminal piece 71 on the phase-specific terminal member 68. By attaching the terminal circuit unit 67 to the stator 53, the terminal pieces 71 are pressed toward the coil ends 66, and the coil ends 66 are press fitted into the respective V-groove 82. In this connection, the grooves 82 for fitting the coil ends 66 need not necessarily be a V-shape groove, but it may take a U-shape or any other notch shape so long as insulating coating on the coil ends 66 is cut by the edge of the notch 82 for securing the electrical continuity.

After this press-fitting, each terminal piece 71 is joined to the coil end 66 by fusing or TIG welding using tungsten. Since the coil end 66 is press-fitted into the V-shape groove 82 in this case, positioning can be easy, and the joining reliability improves since the positions are reliably fixed and held in the state of press-fitting. In addition, since the joined positions of all terminal ends 71 is axially aligned at the same position, the joining operation such as fusing is facilitated.

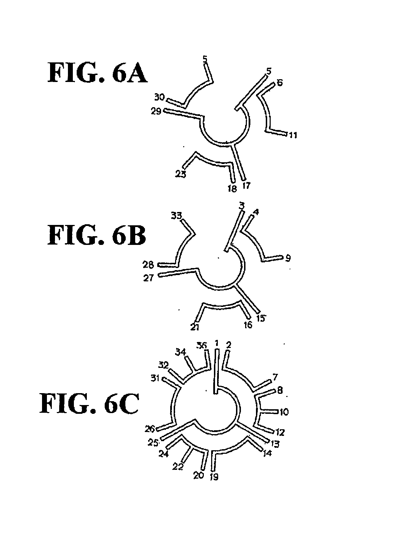

The way in which the circuit connections shown in either FIGS. 2 or 3 are formed in this embodiment will now be described by reference to FIGS. 5 and 6A-6C. As shown in FIG. 5 the 36 terminal pieces (each of which has previously identified by the reference numeral 71) are numbered in a clockwise circumferential direction starting from the top and designated by numerals 1 through 36 as radially projected. These terminal pieces 1 through 36 are connected as shown by the dotted lines using the three-layered, phase-specific terminal members 68. More specifically, the terminal pieces 1 through 36 are connected by several conductive strips for each phase as shown respectively in FIGS. 6(A), 6(B), and 6(C). In each layer, the phase-specific terminal member is made of plural pattern pieces that constitute arcs on double concentric circles and each of which is formed to protrude radially by the selection of the terminal pieces 1 through 36 in which coil ends are connected to each pattern piece. The individual pieces have not been numbered, but the coil ends 66 which are connected at each phase are numbered in accordance with the numbering applied in FIG. 5.

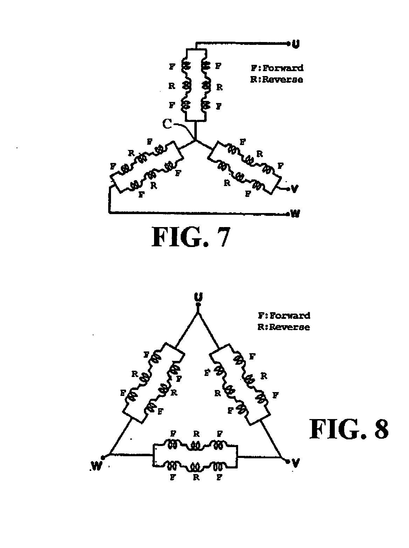

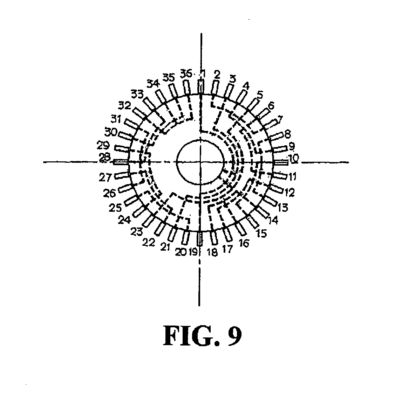

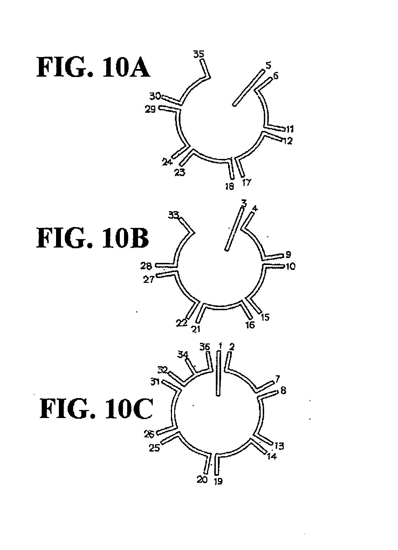

Referring now to the embodiment of FIGS. 7- 10C, this is an embodiment generally similar to the previously described embodiment of FIGS. 2-6C, but which facilitates the establishment of three coil series, two parallel connection either as a Y-connection as shown in FIG. 7 or a Δ connection as shown in FIG. 8. Like the previous embodiment FIG. 9 shows the 36 terminal pieces (each of which has previously identified by the reference numeral 71) are numbered in a clockwise circumferential direction starting from the top and designated by numerals 1 through 36 as radially projected. Also, as before, the terminal pieces 1 through 36 are connected by several conductive strips for each phase as shown respectively in FIGS. 10A, 10B, and 10C. In each layer, the phase-specific terminal member is made of plural pattern pieces that constitute arcs on double concentric circles and each of which is formed to protrude radially by the selection of the terminal pieces 1 through 36 in which coil ends are connected to each pattern piece. The individual pieces have not been numbered, but the coil ends 66 which are connected at each phase are numbered in accordance with the numbering applied in FIG. 9.

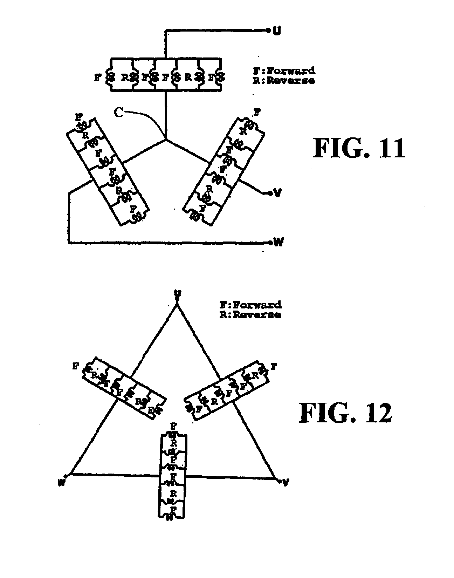

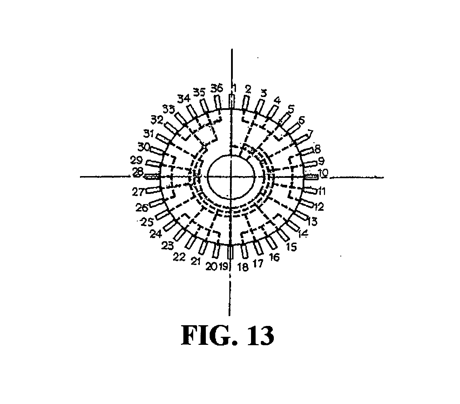

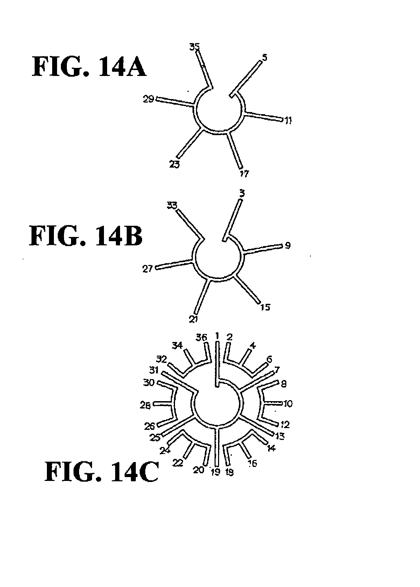

Referring now to the embodiment of FIGS. 11-14C, this embodiment is generally similar to the two embodiments previously described. However this embodiment permits the establishment of a six-parallel connection either in a Y-connection as shown in FIG. 11 or a Δ connection as shown in FIG. 12. Like the previous embodiments, FIG. 13 shows the 36 terminal pieces (each of which has previously identified by the reference numeral 71) are numbered in a clockwise circumferential direction starting from the top and designated by numerals 1 through 36 as radially projected. Also, as before, the terminal pieces 1 through 36 are connected by several conductive strips for each phase as shown respectively in FIGS. 14(A), 14(B), and 14(C). In each layer, the phase-specific terminal member is made of plural pattern pieces that constitute arcs on double concentric circles and each of which is formed to protrude radially by the selection of the terminal pieces 1 through 36 in which coil ends are connected to each pattern piece. The individual pieces have not been numbered, but the coil ends 66 which are connected at each phase are numbered in accordance with the numbering applied in FIG. 13.

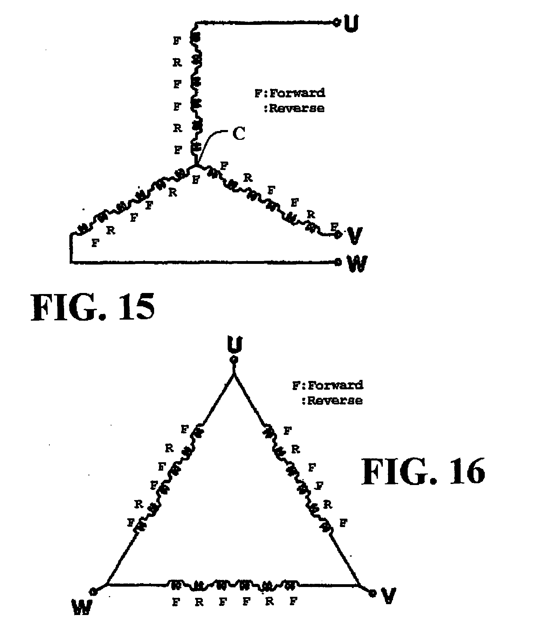

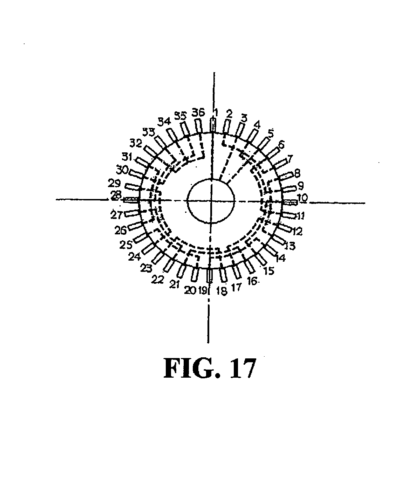

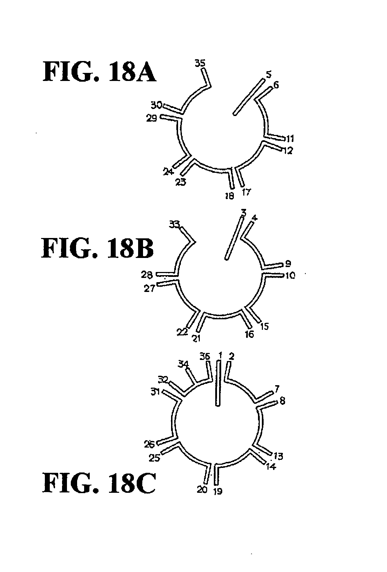

Referring now to the embodiment of FIGS. 15-18C, this embodiment is generally similar to the three embodiments previously described. However this embodiment permits the establishment of a six-coil series connection either in a Y-connection as shown in FIG. 15 or a Δ connection as shown in FIG. 16. Like the previous embodiments, FIG. 17 shows the 36 terminal pieces (each of which has previously identified by the reference numeral 71) are numbered in a clockwise circumferential direction starting from the top and designated by numerals 1 through 36 as radially projected. Also, as before, the terminal pieces 1 through 36 are connected by several conductive strips for each phase as shown respectively in FIGS. 17(A), 17(B), and 17(C). In each layer, the phase-specific terminal member is made of plural pattern pieces that constitute arcs on double concentric circles and each of which is formed to protrude radially by the selection of the terminal pieces 1 through 36 in which coil ends are connected to each pattern piece. The individual pieces have not been numbered, but the coil ends 66 which are connected at each phase are numbered in accordance with the numbering applied in FIG. 17.

It should be noted that in the Y connection embodiments shown in FIGS. 2, 7, 11 and 15 there is a common point indicated at C (the center position of the circuit diagrams) that commonly connects each group of six coils in each U, V, and W phase. The pattern piece containing the common point C may be formed in one of the layers of phase-specific terminal member in said three-layered terminal circuit unit or may be formed as a separate layer. When the pattern piece with the common point C is formed as a separate layer, it may be attached to the end opposite to the end where the three-layered terminal circuit unit 67 of the stator is attached.

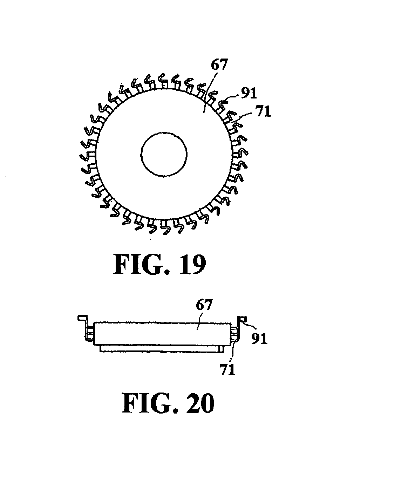

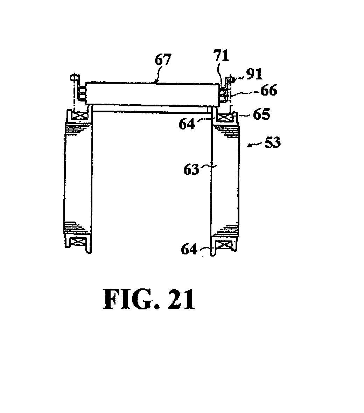

In all of the embodiments thus far described, the terminal pieces 71 of the phase specific terminal members have had grooves 82 that received the coil wire ends 66 and which grooves faced in an axial direction to receive a radially extending coil wire end 66. Next will be described the embodiment of FIGS. 19-21 where the phase specific terminal members can be of any type previously described but the wire connection is made in a different manner. Because this is the only difference, only that portion of the construction will be described in detail and components having the same general construction as those previously described will be identified by the same reference numerals.

In this embodiment, a connecting piece 91, which is V-shaped when viewed in the axial direction, is formed at the end of each terminal piece 71 on the three-layered, phase specific terminal members that are laminated within the terminal circuit unit 67. The coil ends 66 of the coil windings 65 on the stator 53 is fitted within the connecting piece 91 of each terminal piece 71 and is joined by fusing or the like. In this case, it is desirable to fit the coil end 66 into the V-shaped connecting piece 91, and then to crimp the V-shaped connecting piece 91 to fix and hold the coil end 66.

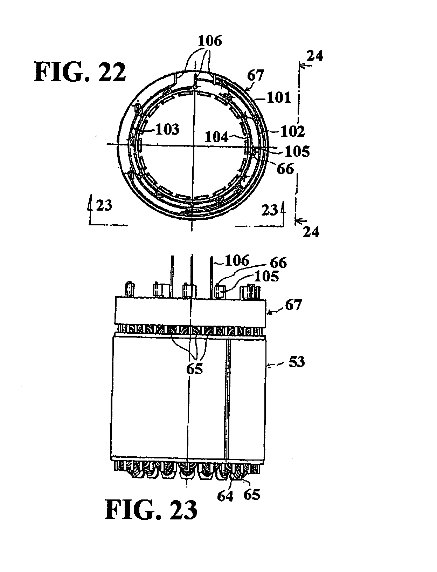

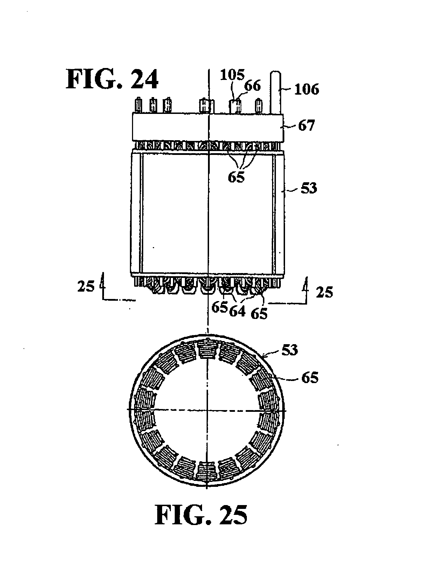

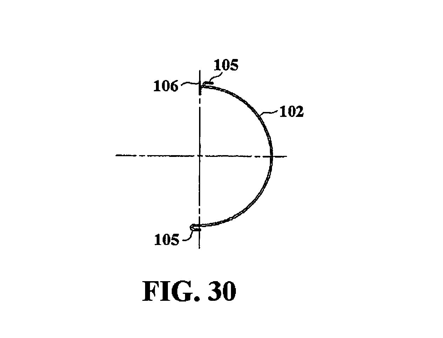

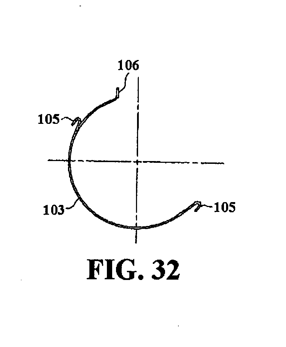

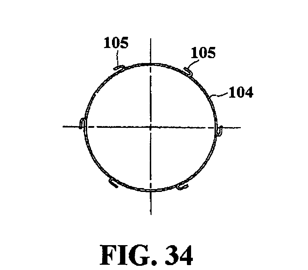

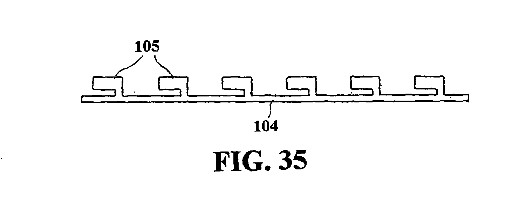

In all of the embodiments thus far described, all of the phase specific terminal members have been formed from generally flat plates having a curved shape in the form of a segment of a circle from which the terminal pieces extended radially outwardly to receive the coil winding ends with those of the respective phases being maintained in axially spaced positions by the bonding resin. Next will be described the embodiment of FIGS. 22-35 where the phase specific terminal members are formed and spaced in a different manner. Aside from this the construction is basically the same as the embodiments already described and where components are the same or substantially the same as the previously described embodiments, they are identified by the same reference numerals and will be discussed further only where it is necessary to understand this embodiment. For the same reason, only the stator, armature assembly is shown and is indicated generally by the same reference numeral 53 as previously utilized. The terminal circuit unit although the phase specific terminal members are different from those previously described is also again indicated generally by the reference numeral 67.

As noted in the previous paragraph the phase specific and common terminal members are formed and spaced in a different manner they serve basically the same functions as in the previously described embodiments and this embodiment also shows a common terminal for use with Y connected coils. In this embodiment the three phase specific terminal members are indicated generally at 101, 102 and 103. The common terminal is indicated generally at 104.

Unlike the previously described embodiments where the phase specific terminal members were axially spaced from each other and were formed from generally flat curved pieces from which the terminal pieces extended radially and had axially bent ends to receive the respective coil wire ends, in this embodiment the three phase specific terminal members 101, 102 and 103 and the common terminal 104 are formed from flat formed sheets of conductive material that are curved into arcs having different radii and which are held by the bonding material in the same axial positions as each other but in circumferentially spaced from each other.

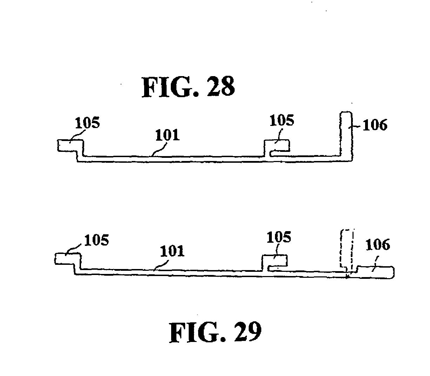

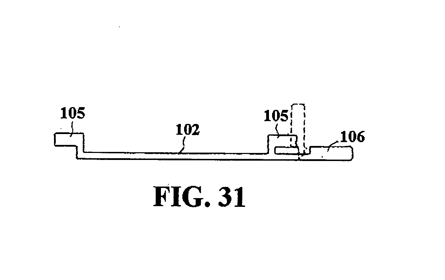

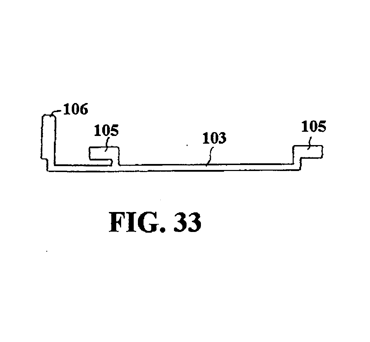

In addition and as may be best seen from the respective plan views of the unbent pieces in FIGS. 28 and 29 (terminal member 101), FIG. 31 (terminal member 102), FIG. 33 (terminal member 103) and FIG. 39 (common terminal 104), each piece is formed with two or more axially extending projections 105 that form the terminal pieces for receiving the respective coil wire ends 66 for the coils connected by the respective phase or the common ends in the case of the common terminal member 104.

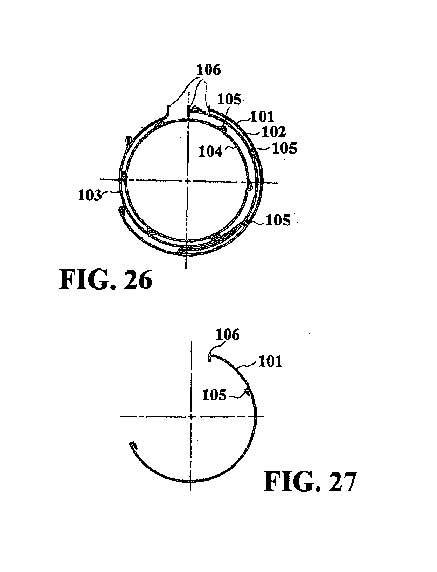

After being formed in these flat forms the respective terminal members 101, 102 103 and 104 are bent into curves of different radiuses as seen respectively in FIGS. 27, 30, 32 and 34 and the projections or terminal pieces 105 are curved to form openings at the same axial positions to receive the respective coil wire ends 66. The curved terminal members 101, 102 103 and 104 are then positioned in their relative radial positioning as shown in FIGS. 22, and 26 and maintained in this relationship by the bonding resinous material 69. As before the wire ends 66 may be retained initially by crimping and finally by fusing or TIG welding using tungsten.

The external connections, indicated here by the reference numerals 106 may be formed initially as axial projections as shown in FIGS. 28 and 33 or may be formed as circumferential extensions that are then bent axially as shown in FIGS. 29 and 31.

Thus from the foregoing description it should be obvious that the described and illustrated embodiments permit the assembly of a multi phase armature with maximum efficiency and the ability to use automated techniques as well offering greater flexibility in the way the coils are arranged in the desired types of circuits. Of course those skilled in the art will readily understand that the described embodiments are only exemplary of forms that the invention may take and that various changes and modifications may be made without departing from the spirit and scope of the invention, as defined by the appended claims.

An electrical device having a number of embodiments of multi phase armatures incorporating terminal circuits with maximum efficiency and the ability to use automated techniques as well offering greater flexibility in the way the coils are arranged in the desired types of circuits.

## Claims

1. A terminal structure for interconnecting coil ends in a plural phase rotary electrical machine and adapted to be mounted at one axial end of a core having a plurality of circumferentially spaced pole teeth around which electrical coils are wound, said terminal structure comprising a plurality of conductors equal in number to at least the number of phases and bonded in spaced relationship to each other, each of said conductors having terminal ends extending outwardly beyond the bonding material and having wire receiving recesses therein for receiving a coil wire end from a respective one of said coil windings, substantially all of said wire receiving recesses lying in a common axial plane.

2. A terminal structure as set forth in claim 1 wherein substantially all of the terminal receiving recesses open in the same direction.

3. A terminal structure as set forth in claim 2 wherein all of the terminal receiving recesses lie in the same common plane and face in the same direction.

4. A terminal structure as set forth in claim 3 wherein the terminal receiving recesses open axially.

5. A terminal structure as set forth in claim 4 wherein the terminal receiving recesses are configured to strip insulation from the coil wire ends when received therein.

6. A terminal structure as set forth in claim 3 wherein the terminal receiving recesses open radially.

7. A terminal structure as set forth in claim 3 wherein the terminal receiving recesses are defined by angularly related leg portions that can be crimped to retain the coil wire end.

8. A terminal structure as set forth in claim 1 wherein the conductors are axially spaced from each other.

9. A terminal structure as set forth in claim 8 wherein each of the phase is comprised of a plurality of interconnected conductors each having at least two circumferentially spaced terminal end portions for receiving a coil wire end from a respective one of said coil windings.

10. A terminal structure for interconnecting coil ends in a plural phase rotary electrical machine and adapted to be mounted at one axial end of a core having a plurality of circumferentially spaced pole teeth around which electrical coils are wound, said terminal structure comprising a plurality of conductors equal in number to at least the number of phases and bonded in spaced relationship to each other, each of said phase being comprised of a plurality of interconnected conductors each having at least two circumferentially spaced terminal end portions for receiving a coil wire end from a respective one of said coil windings.

11. A terminal structure as set forth in claim 10 wherein the phases are axially spaced from each other.

12. A terminal structure as set forth in claim 111 wherein each phase-specific terminal member is made of plural connecting pieces comprised of arcs of concentric circles.
